Europäisches Patentamt

European Patent Office

Office européen des brevets

(11) Veröffentlichungsnummer: **0 464 320 A2**

# EUROPÄISCHE PATENTANMELDUNG

(21) Anmeldenummer: **91105666.1**

(51) Int. Cl.⁵: **G06F 1/00**

(22) Anmeldetag: **10.04.91**

(30) Priorität: **06.07.90 DE 4021535**

(43) Veröffentlichungstag der Anmeldung:
**08.01.92 Patentblatt 92/02**

(84) Benannte Vertragsstaaten:
**AT BE CH DE DK ES FR GB GR IT LI LU NL SE**

(71) Anmelder: **GIGATAPE SYSTEME FUER DATENSICHERUNG GMBH**
**Benzstrasse 28**
**W-8039 Puchheim(DE)**

(72) Erfinder: **Brauner, Ingolf**
**Schützenstrasse 15**
**W-8912 Kaufering(DE)**

(74) Vertreter: **Weber, Otto Ernst, Dipl.-Phys. et al**
**Weber & Heim Hofbrunnstrasse 36**
**W-8000 München 71(DE)**

(54) Verfahren zum Erzeugen eines individuellen Datenträgerschutzes gegen eine unautorisierte Benutzung.

(57) Es wird ein Verfahren zum Erzeugen eines individuellen Schutzes eines Datenträgers, beispielsweise einer Magnetbandkassette, gegen eine unautorisierte Benutzung in einem Datenverarbeitungsgerät beschrieben. Der Schutz verhindert, daß ein auf dem Datenträger enthaltenes Datenverarbeitungsprogramm unautorisiert benutzt oder kopiert wird. Zu diesem Zweck wird herstellerseitig eine gerätespezifische Kennzeichnung, beispielsweise eine Geräteseriennummer, bevorzugt automatisch abgetastet und geräteseitig abgespeichert. Sobald ein Datenträger in das Gerät erstmalig eingelegt wird, schreibt dieses die Kennzeichnung auf den Datenträger. Von diesem Zeitpunkt an kann auf den Datenträger nur mit diesem Gerät zugegriffen werden.

EP 0 464 320 A2

Rank Xerox (UK) Business Services

Die Erfindung betrifft ein Verfahren zum Erzeugen eines individuellen Schutzes eines Datenträgers, beispielsweise eine Magnetbandkassette, gegen eine unautorisierte Benutzung in einem Datenverarbeitungsgerät unter Verwendung einer Gerätekennzeichnung.

Bekanntlich ist das unautorisierte Benutzen und/oder Kopieren von Datenverarbeitungsprogrammen, das auch als Programmpiraterie bezeichnet wird, ein großes wirtschaftliches Problem für die Programmhersteller. Wenn die Benutzung und Vervielfältigung außerhalb des Einflußbereichs des Herstellers unkontrolliert erfolgen kann, ist eine angemessene wirtschaftliche Verwertung nicht mehr möglich. Zur Verhinderung von Raubkopien und unberechtigten Software-Benutzungen wurde daher eine Reihe von mechanischen und programmgesteuerten Sicherheitsvorkehrungen getroffen. Ein bekanntes Verfahren besteht darin, die Benutzung eines Programmdatenträgers nur in einem bestimmten Datenverarbeitungsgerät zu gestatten und bei jedem anderen Gerät einen Programmlauf zu verhindern. Dies erfolgt mit Hilfe einer zusätzlichen Kodiereinheit, die beispielsweise auf einer Steckkarte oder einem sogenannten Dongle untergebracht ist. Es wird damit zwar der erwünschte große Schutz gegen unberechtigte Benutzer erreicht, andererseits ist durch die paarweise Zuordnung von Kodiereinheit und Datenträger hersteller- und händlerseitig ein relativ großer Lager- und Verwaltungsaufwand erforderlich, weil der Händler zu jeder Kodiereinheit die zugehörigen Datenträger bereithalten und darauf achten muß, daß keine Vertauschung stattfindet.

Der Erfindung liegt die **Aufgabe** zugrunde, ein Verfahren der eingangs genannten Art anzugeben, welches einen großen Schutz gewährleistet und gleichzeitig mit geringem Aufwand praktizierbar ist.

Diese Aufgabe wird dadurch gelöst, daß die Gerätekennzeichnung herstellerseitig im Datenverarbeitungsgerät gespeichert wird, daß beim erstmaligen Benutzen des betreffenden Datenträgers in diesem Gerät die Gerätekennzeichnung auf den Datenträger geschrieben wird, und daß benutzerseitig selbsttätig die Geräte- und Datenträgerkennzeichnung auf Übereinstimmung überprüft werden.

Das hat den Vorteil, daß der Programmhersteller alle Datenträger identisch herstellen und vermarkten kann, d.h. eine feste Zuordnung zwischen einem Datenträger und einem Datenverarbeitungsgerät ist zunächst nicht erforderlich. Die Lagerhaltung und Verwaltung wird daher beträchtlich vereinfacht. Dies gilt auch für die Vertriebswege, wo die Anzahl der bereitzuhaltenden Datenträger in Bezug auf verschiedene Geräte relativ klein sein kann. Erst wenn der Vertreiber oder Endbenutzer einen rechtmäßig erworbenen Datenträger erstmalig in sein Gerät eingelegt hat, wird dieser gerätespezifisch gekennzeichnet. Von diesem Zeitpunkt an kann der Datenträger ausschließlich in diesem Gerät benutzt werden. Anders ausgedrückt bedeutet dies, daß die eindeutige Zuordnung von Gerät und Datenträger erst in der letzten Stufe des Vertriebsweges bzw. beim Endbenutzer erfolgt, wobei das Gerät selbst den sogenannten Dongle ersetzt.

Ein weiterer Vorteil ist darin zu sehen, daß im Falle einer Gerätereparatur und/oder bei einem Bauteileaustausch des Geräts die ursprüngliche Kennzeichnung auf einfache Weise übernommen werden kann, so daß die bereits vorhandenen, codierten Datenträger weiterverwendet werden können.

Die Erfindung hat auch den großen Vorteil, daß Sicherungskopien der gekennzeichneten Datenträger in beliebiger Anzahl angefertigt werden können, ohne daß der erwünschte Schutz eingeschränkt wird.

Ferner ist das Verfahren auf einfache Weise mit Funktions- und/oder Qualitätstests kombinierbar, die herstellerseitig vor der Geräteauslieferung vorgenommen werden. Es kann dann zum Lesen und Abspeichern der Gerätekennzeichnung der ohnehin vorhandene Steuerrechner herangezogen werden.

Das Einlesen der Gerätekennzeichnung ist besonders einfach, wenn sie auf dem Gerät maschinenlesbar angebracht ist, weil dann ein hoher Automatisierungsgrad erreicht wird. Grundsätzlich ist es jedoch auch möglich, die Gerätekennzeichnung von einer Bedienperson, beispielsweise über eine Tastatur, einzugeben.

Eine bevorzugte Ausgestaltung besteht hierbei darin, daß die Gerätekennzeichnung aus einem Barcode besteht, der auf das Gerät aufgeklebt ist, der auch in anderer Weise, beispielsweise im Zusammenhang mit der Lagerverwaltung und ähnlichem ausgewertet werden kann.

Besonders einfach kann das Verfahren durchgeführt werden, wenn als Gerätekennzeichnung die Geräteseriennummer verwendet wird, weil sie ohnehin an jedem Gerät vorhanden ist.

Durch eine entsprechende Wahl der Gerätekennzeichnung und/oder von weiteren Kennzeichnungen ist es in einer bevorzugten Ausgestaltung der Erfindung möglich, Datenträger in der Weise zu kennzeichnen, daß sie in einer vorgegebenen Anzahl von Datenverarbeitungsgeräten benutzt werden können. Das hat den Vorteil, daß beispielsweise Datenträger erzeugt werden können, die für Servicezwecke in einem vorgegebenen Umfang eingesetzt werden können, ohne daß der gerätespezifische Schutz in jedem Fall wirksam wird.

Es wird damit ferner die Möglichkeit geschaffen, daß die entsprechend gekennzeichneten Datenträger zwar innerhalb einer Gerätemenge eines Anwenders ausgetauscht und benutzt werden können, daß aber eine Verwendung außerhalb dieser Gerätemenge ausgeschlossen ist.

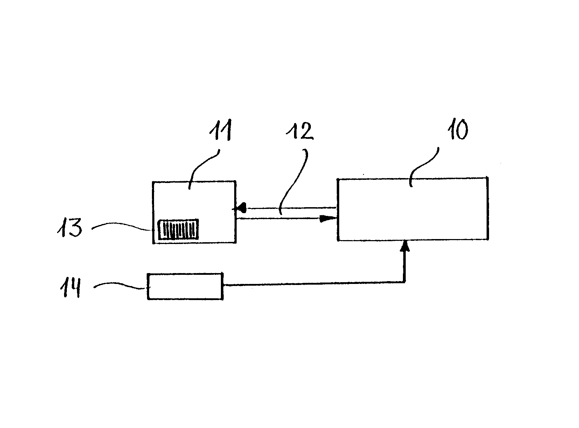

Nachfolgend wird die Erfindung anhand eines in der Zeichnung dargestellten Ausführungsbeispiels weiter beschrieben.

Die in der Figur veranschaulichte Konfiguration umfaßt einen Steuerrechner 10, wie er beispielsweise in automatischen Produktionstestsystemen für ein Datenverarbeitungsgerät 11 verwendet wird. Mit dem Steuerrechner 10 werden auf bekannte Weise herstellerseitig die Funktionen des Datenverarbeitungsgeräts 11 überprüft, bevor es in den Handel oder an Endverbraucher ausgeliefert wird. Der Datenaustausch erfolgt über Verbindungsleitungen 12.

Auf dem Gehäuse des Datenverarbeitungsgeräts 11 ist eine maschinenlesbare Gerätekennzeichnung 13 angebracht, die im dargestellten Beispiel aus einem eine Geräteseriennummer enthaltenden Barcode besteht. Mit Hilfe eines Lesers 14 wird die Gerätekennzeichnung von der Steuerung des Steuerrechners 10 automatisch gelesen und von dort selbsttätig in das Datenverarbeitungsgerät übertragen und geräteseitig gespeichert. Die Speicherung erfolgt in einem wiederbeschreibbaren Festwertspeicher, z.B. einem EEPROM, oder einer programmierbaren Logik, z.B. EPLD. Das Lesen und Übertragen der Gerätekennzeichnung 13 wird im vorliegenden Beispiel während der automatisch ablaufenden Funktionstests durchgeführt.

Wird zu einem späteren Zeitpunkt ein mit einem Programm versehener Datenträger, wie beispielsweise eine Magnetbandkassette oder eine Floppy-Disk, in das Datenverarbeitungsgerät erstmalig eingelegt, so schreibt dieses - ohne daß der Benutzer darauf Einfluß hat - die abgespeicherte Gerätekennzeichnung auf den Datenträger und stellt auf diese Weise eine eindeutige Zuordnung her. Datenträger, die nicht mit dieser individuellen, gerätespezifischen Kennzeichnung versehen sind und stattdessen eine andere Kennzeichnung aufweisen, werden von diesem Datenverarbeitungsgerät 13 als unzulässig zurückgewiesen und es ist ausschließlich die Benutzung von Datenträgern möglich, die mit der Gerätekennzeichnung versehen wurden.

**Patentansprüche**

1. Verfahren zum Erzeugen eines individuellen Schutzes eines Datenträgers, beispielsweise einer Magnetbandkassette, gegen eine unautorisierte Benutzung in einem Datenverarbeitungsgerät unter Verwendung einer Gerätekennzeichnung, **gekennzeichnet** durch folgende Verfahrensschritte:

    (a) Herstellerseitiges Abspeichern der Gerätekennzeichnung in einem geräteseitigen Speicher

    (b) Schreiben und Abspeichern der Gerätekennzeichnung auf den/dem Datenträger(n) beim erstmaligen Benutzen im betreffenden Datenverarbeitungsgerät

    (c) Benutzerseitiges, selbsttätiges Überprüfen der Geräte- und Datenträgerkennzeichnung auf Übereinstimmung.

2. Verfahren nach Anspruch 1,
dadurch **gekennzeichnet**,
daß auf dem Datenverarbeitungsgerät herstellerseitig eine maschinenlesbare Gerätekennzeichnung angebracht wird und daß sie maschinell gelesen wird.

3. Verfahren nach Anspruch 1 oder 2,
dadurch **gekennzeichnet**,
daß das Lesen und Abspeichern der Gerätekennzeichnung unter Kontrolle eines Steuerrechners durchgeführt wird, der zusätzlich Funktions- und/oder Qualitätstests für das betreffende Datenverarbeitungsgerät steuert.

4. Verfahren nach einem der vorhergehenden Ansprüche,
dadurch **gekennzeichnet**,
daß weitere Kennzeichnungen eingelesen, abgespeichert und gegebenenfalls auf einen Datenträger geschrieben werden, welche eine Benutzung des Datenträgers in mehreren Datenverarbeitungsgeräten gestatten.

5. Verfahren nach einem der vorhergehenden Ansprüche,
dadurch **gekennzeichnet**,
daß als Gerätekennzeichnung eine Geräteseriennummer verwendet wird.